# FASCICULE DE BREVET EUROPEEN

(11) **EP 2 710 229 B1**
(45) Date de publication et mention de la délivrance du brevet: **30.03.2016**
(21) Numéro de dépôt: 12728670.6
(22) Date de dépôt: 14.05.2012
(51) Int. Cl.: F01D 5/30, F04D 29/02, F01D 5/32

(54) **ROUE À AUBES DE TURBOMACHINE**
BESCHAUFELTE SCHEIBE EINER TURBOMASCHINE
TURBOMACHINE DISK WITH BLADES

(30) Priorité: 17.05.2011 FR 1154301
(43) Date de publication de la demande: 26.03.2014
(73) Titulaire: SNECMA, 75015 Paris (FR)
(72) Inventeur: CHATENET, Luc, Henri, F-77550 Moissy Cramayel Cedex (FR); LE QUELLEC, John, F-77550 Moissy Cramayel Cedex (FR)
(74) Mandataire: Robert, Mathias
(86) Numéro de dépôt international: PCT/FR2012/051061
(87) Numéro de publication internationale: WO 2012/156633

(56) Documents cités:
- EP-A1- 2 090 750
- EP-A2- 2 253 800
- DE-A1- 3 236 021
- DE-A1-102005 008 509
- FR-A1- 2 881 174
- JP-A- 1 237 304
- JP-A- 61 129 405
- JP-A- 2007 120 460
- US-A1- 2010 189 564

## Description

La présente invention concerne une roue à aubes de turbomachine.

Une roue à aubes comprend classiquement un disque portant à sa périphérie externe des aubes de soufflante, ces aubes ayant des pieds qui sont engagés dans des rainures sensiblement axiales de la périphérie externe du disque. Les aubes de soufflante sont maintenues radialement sur le disque par coopération de formes de leurs pieds avec les rainures du disque, les pieds d'aubes étant par exemple du type en queue d'aronde. Des plates-formes inter-aubes sont montées sur le disque entre les aubes de soufflante ou font partie intégrante du disque. Des aubes de ce type sont par exemple décrites dans le document FR 2 881 174, au nom de la Demanderesse. Les rainures, également appelées alvéoles, peuvent être droites ou curvilignes et les surfaces de contact entre les pieds des aubes et la paroi interne des rainures sont appelées portées.

Les aubes sont montées avec un jeu entre leurs pieds et les parois des rainures. Afin de réduire ce jeu, il a été proposé que des cales élastiques soient montées entre le fond des rainures et les pieds d'aube, de façon à ce que ces derniers soient maintenus radialement en appui sur les portées du disque. Toutefois, l'utilisation de cales n'est possible que pour des aubes de grande taille, telles que des aubes de soufflante afin que les cales soient réalisables et qu'elles aient une raideur suffisante pour être montées en force sans être déformées.

Les cales doivent en outre être de grande précision afin que les aubes soient maintenues sans être complètement bloquées dans une position qui ne permettrait pas l'appui normal des pieds d'aubes sur les portées des rainures.

Ce type de roue à aubes présente les inconvénients exposés ci-après.

La rotation de la roue à aubes lors du fonctionnement de la turbomachine applique aux aubes des efforts radiaux importants, qui les maintiennent dans leur position dite de fonctionnement. A titre d'exemple, une aube de compresseur haute pression de 17 grammes peut être soumise à une force centrifuge d'environ 500 kg, une aube de soufflante d'environ 4,5 kg pouvant être soumise à une force supérieure à 60 tonnes.

En l'absence de cale ou lorsque les cales sont insuffisamment préchargées, à chaque arrêt, la roue à aubes se trouve dans une position angulaire différente et les aubes changent de position sous l'effet de leur poids propre.

L'équilibrage de la roue à aubes, consistant à éliminer tout balourd dans cette roue, est réalisé à basse vitesse, mais comme les positions des aubes et donc le balourd de la roue à aubes sont différents d'un démarrage à l'autre, cet équilibrage ne peut pas être réalisé avec une précision suffisante.

En outre, les déplacements de faible amplitude et sous fortes charges des aubes, qui se produisent à chaque démarrage de la turbomachine, usent la surface interne des rainures de montage des pieds d'aube. Il s'agit d'une usure par « fretting », qui peut empêcher le contrôle de l'intégrité du disque et des aubes par courants de Foucault, ce qui peut conduire au rebut d'un disque et/ou des aubes qui seraient normalement encore utilisables.

En variante, les aubes peuvent être du type à attache marteau, les pieds des aubes étant alors montés dans une rainure circonférentielle. De la même manière que précédemment, les aubes sont maintenues radialement sur le disque par coopération de formes de leurs pieds avec la rainure circonférentielle du disque. Des aubes de ce type sont par exemple décrites dans le document FR 2 900 989, au nom de la Demanderesse.

Les pieds d'aubes sont insérés radialement dans la rainure circonférentielle par une même encoche du disque, les aubes étant ensuite glissées circonférentiellement le long de la rainure jusqu'à leur position finale. Le maintien des aubes est assuré par un verrou, un jeu circonférentiel étant maintenu entre les aubes pour permettre les dilatations thermiques lors du fonctionnement de la turbomachine.

Le montage de cales entre les pieds d'aubes et le fond de la rainure circonférentielle n'est pas possible.

Une fois montées, les aubes sont donc mobiles le long de la rainure, sur une distance correspondant à la valeur cumulée des jeux circonférentiels entre les aubes.

Ainsi, à chaque arrêt, les aubes peuvent changer de position puisque la position angulaire de la roue n'est pas forcément la même. Les aubes se repositionnent de façon aléatoire sous leur propre poids, dans la limite du jeu disponible. Ces changements de position des aubes ont plusieurs conséquences directes sur l'équilibrage de la roue à aubes et sur sa durée de vie.

Au moment de l'équilibrage, le changement de position des aubes provoque une dispersion des mesures du balourd d'un démarrage à un autre. Cette dispersion limite la précision de l'équilibrage avec des conséquences significatives sur les efforts transmis aux paliers et sur les niveaux de vibration ressentis.

Une autre conséquence est l'usure latérale des plates-formes qui prennent appui les unes sur les autres avec un déplacement relatif à chaque démarrage. Cette usure amplifie encore le jeu tangentiel entre les aubes, ce qui engendre un balourd plus important et une usure des portées du disque et des pieds d'aubes.

De la même manière que précédemment, le déplacement des aubes peut également engendrer une usure par « fretting » de la paroi interne des rainures de montage des pieds d'aubes, rendant difficile le contrôle des fissures par courant de Foucault.

Enfin, une possibilité consiste à utiliser des disques aubagés monoblocs, dans lesquels les aubes et le disque sont réalisés de façon monobloc par usinage.

Cette solution n'est cependant pas toujours applicable à l'ensemble des rotors, notamment en raison des contraintes thermiques, des contraintes mécaniques et des contraintes de poids, et présente des coûts de réalisation et de maintenance très élevés.

Il est par ailleurs difficile, voire impossible, d'usiner des circuits de refroidissement dans les aubes de disques aubagés monoblocs.

Les documents JP 2007-120460, DE 32 36 021, JP 1-237304 et JP 61-129405. décrivent l'utilisation de cales à mémoire de forme, aptes à se déformer entre deux positions en fonction de la température.

Le refroidissement et l'échauffement de ces cales sont relativement complexes à mettre en oeuvre et à contrôler.

L'invention a notamment pour but d'apporter une solution simple, efficace et économique aux problèmes présentés ci-dessus.

A cet effet, elle propose une roue à aubes de turbomachine, comprenant un disque dont la périphérie externe est formée avec au moins une rainure de montage des pieds des aubes, une cale étant montée entre chaque pied d'aube et le fond de la rainure, la cale étant du type bistable en position et comprenant une lame ressort déformable pouvant occuper une première position stable de montage ou de démontage dans laquelle elle n'exerce pas d'effort sur le pied d'aube et une seconde position stable dans laquelle elle exerce un effort radial sur le pied d'aube pour immobiliser l'aube et la stabiliser dans une position finale, caractérisée en ce que la forme et la masse de la lame ressort sont déterminées de façon à ce que le passage de la première position stable à la seconde position stable s'exerce par centrifugation, par exemple par rotation de la roue à une vitesse supérieure à 2000 tours par minute.

De cette manière, il est possible de monter les cales dans une première position et les aubes dans la ou les rainures du disque, de faire tourner le disque à une vitesse suffisante pour que les cales et les aubes prennent leurs positions définitives, en déformant chaque cale afin qu'elle passe de sa première position à sa seconde position, l'aube étant ensuite maintenue en position finale par la cale, même lorsque le disque est à l'arrêt ou à faible vitesse. La roue à aubes peut alors être équilibrée de façon précise à basse vitesse.

Compte tenu des faibles contraintes ou efforts appliqués par les cales sur le disque, aucun redimensionnement spécifique de ce dernier n'est nécessaire.

Avantageusement, la lame ressort est en appui à ses extrémités sur le fond de la rainure et comprend une zone centrale déformable bistable en position.

Les extrémités de la lame ressort peuvent comporter des rebords incurvés et repliés en direction de la zone centrale, de façon à ne pas endommager le fond de la rainure.

Selon une autre caractéristique de l'invention, la zone centrale de la lame ressort comporte une masselotte.

La masselotte peut ainsi être dimensionnée afin d'ajuster précisément la vitesse de rotation au-delà de laquelle s'effectue le passage de la première à la seconde position stable.

Selon une forme de réalisation de l'invention, le disque comporte une rainure ou une gorge circonférentielle dans laquelle sont engagés les pieds d'aubes et les cales.

Préférentiellement, au moins une extrémité circonférentielle des cales comporte au moins une languette destinée à venir en appui contre le pied d'aube correspondant.

La languette permet de positionner précisément la cale sous le pied d'aube.

L'invention concerne également un procédé de montage et d'équilibrage d'une roue du type précité, caractérisé en ce qu'il comporte les étapes consistant à :
- monter les aubes et les cales en position de montage dans la ou les rainures du disque,
- faire tourner la roue à une vitesse suffisante pour déplacer les aubes par centrifugation dans une position de fonctionnement normal, et pour provoquer le passage de chaque cale dans sa seconde position stable de manière à stabiliser les aubes dans leur position de fonctionnement,
- réaliser l'équilibrage de la roue pour annuler le balourd.

L'équilibrage peut ainsi être réalisé de façon précise et fiable, les aubes gardant toujours la même position, même en cas d'arrêts et de redémarrages successifs de la turbomachine, et quelle que soit la position angulaire de la roue à aubes.

De préférence, le passage des cales dans leur seconde position stable est obtenu par rotation à une vitesse supérieure à 2000 tours par minute, par exemple lors d'une opération de rectification des extrémités des aubes.

En outre, des entretoises peuvent être montées circonférentiellement entre au moins certaines des aubes avant maintien des aubes par les cales, les entretoises étant retirées après maintien des aubes par les cales.

L'entretoisement des aubes peut être réalisé par secteurs, c'est-à-dire que des cales sont disposées entre certaines aubes uniquement, les cales définissant entre elles des secteurs angulaires.

Ceci permet de limiter le déplacement des pieds d'aubes à l'intérieur de la rainure circonférentielle, au démarrage de la turbomachine, avant que les aubes soient immobilisées par les cales.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue partielle et en coupe d'une roue à aubes selon l'invention dans laquelle la cale est dans une première position stable ;
- la figure 2 est une vue correspondant à la figure 1, montrant la cale lors du passage de sa première à sa seconde position stable,
- la figure 3 est une vue correspondant à la figure 1, montrant la cale dans sa seconde position stable,
- la figure 4 est une vue en perspective de la cale.

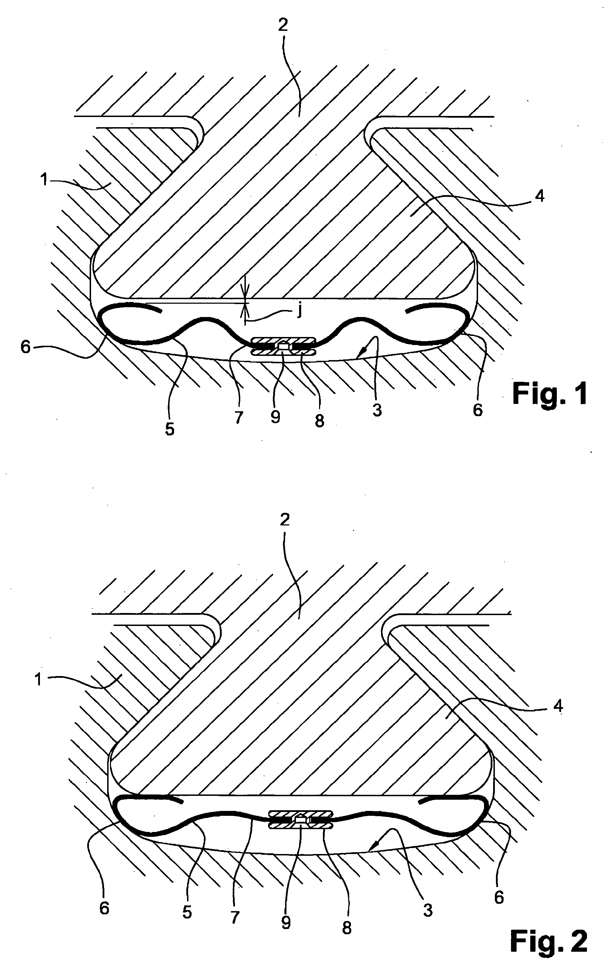

Les figures 1 à 3 montrent une roue à aubes 2 de turbomachine, comprenant un disque 1 dont la périphérie externe est formée avec une pluralité de rainures sensiblement axiales ou avec une rainure ou une gorge circonférentielle 3.

Chaque aube 2 comporte une pale et un pied d'aube 4 en forme de queue d'aronde, qui est engagé dans l'alvéole ou la rainure 3 de forme complémentaire du disque 1 permettant de retenir radialement cette aube 2 sur le disque 1. Les aubes 2 comportent également des plates-formes contiguës définissant une surface interne d'une veine de circulation de fluide, situées radialement entre les pieds d'aubes 4 et les pales.

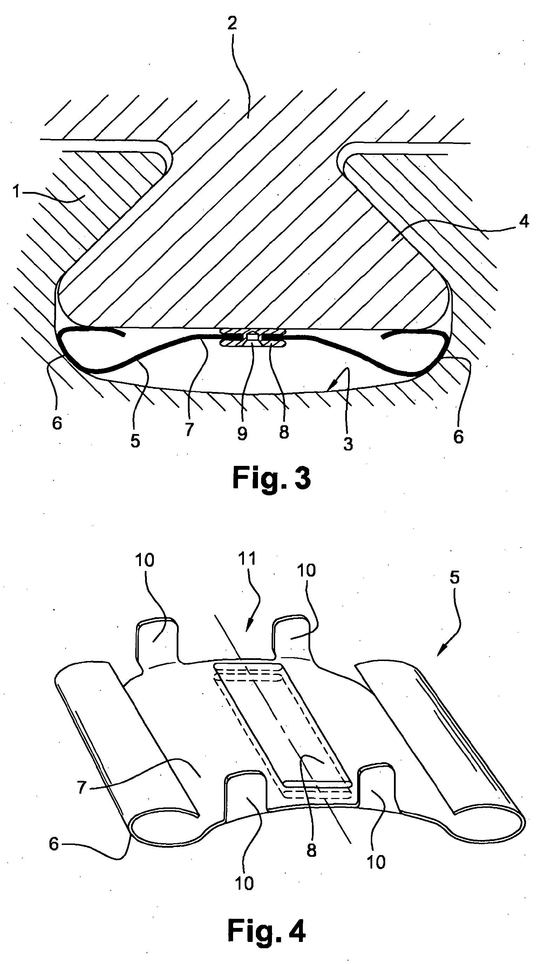

Une cale 11 est montée entre chaque pied d'aube 4 et le fond de la rainure 3. La cale 11 est du type bistable en position et peut occuper une première position stable de montage ou de démontage dans laquelle elle n'exerce pas d'effort sur le pied d'aube 4 (figure 1) et une seconde position stable dans laquelle elle exerce un effort radial sur le pied d'aube 4 pour immobiliser l'aube 2 et la stabiliser dans une position finale (figure 3). Plus particulièrement, comme cela est visible à la figure 4, la cale 11 se présente sous la forme d'une lame ressort déformable entre les deux positions précitées. La lame ressort 5 est en appui sur le fond de la rainure 3 par ses extrémités 6, ces dernières comportant des rebords incurvés et repliés en direction de la zone centrale 7. Une masselotte 8 est fixée par exemple par une vis 9 ou par sertissage à la zone centrale 7 de la lame ressort 5.

La forme et la masse de la lame ressort 5 et de la masselotte 8 sont déterminées de façon à ce que le passage de la première position stable (figure 1) à la seconde position stable (figure 3) se fasse automatiquement par centrifugation, par rotation de la roue à une vitesse supérieure à 2000 tours par minute.

Dans le cas du montage dans une rainure circonférentielle 3, chaque extrémité circonférentielle des cales 11 comporte une ou deux languettes 10 destinées à venir en appui contre un pied d'aube (figure 4), de façon à assurer le bon positionnement de la cale par rapport au pied d'aube correspondant.

La cale 11 peut être réalisée en un matériau métallique présentant des caractéristiques mécaniques suffisantes et compatibles avec les températures atteintes dans les zones concernées.

Un procédé de montage et d'équilibrage d'une roue à aubes selon l'invention va maintenant être décrit en détail.

Tout d'abord, les aubes 2 et les cales 11 sont montées successivement dans la rainure circonférentielle 3, par une même encoche du disque 1, puis sont déplacées circonférentiellement le long de la rainure 3 jusqu'à une position finale. Les languettes 10 permettent de maintenir en position les cales 11 sous les aubes 2 pendant ce déplacement. Un verrou est ensuite monté dans la rainure circonférentielle 3, de façon à empêcher toute sortie d'aube 2, un jeu circonférentiel étant maintenu entre les aubes 2 pour permettre les dilatations thermiques lors du fonctionnement de la turbomachine.

Lors de ce montage, les cales 11 sont dans leur première position, représentée à la figure 1, un jeu radial j étant ménagé entre les rebords des cales 11 et les pieds d'aube 4.

Des entretoises provisoires sont montées circonférentiellement entre les plates-formes de certaines aubes 2, de façon à répartir les aubes 2 en secteurs angulaires, par exemple en 2, 3 ou 4 secteurs en fonction notamment de l'amplitude du jeu tangentiel entre les aubes 2, du diamètre du disque 1 et du nombre d'aubes 2.

On fait ensuite tourner la roue à une vitesse suffisante pour amener les aubes 2 par centrifugation dans une position finale de fonctionnement et pour provoquer le passage de chaque cale 11 dans sa seconde position stable. Cette vitesse de rotation est par exemple de l'ordre de 3000 ou 4000 tours par minute.

Cette première mise en rotation de la roue peut correspondre par exemple à une opération de rectification du sommet des aubes 2, c'est-à-dire de leurs extrémités radialement externes.

Lors de cette rotation, les rebords sont plaqués contre les pieds d'aubes 4 (figure 2), puis les cales 11 se déforment afin de passer de la première à la seconde forme stable (figure 3).

Les cales 11, dans leur seconde position stable, appliquent sur les pieds d'aubes 4 un effort dirigé radialement vers l'extérieur, suffisant pour maintenir les aubes 2 en position de fonctionnement. Cet effort est déterminé de façon à compenser le poids de l'aube 2 ainsi que les effets inertiels se produisant au démarrage de la turbomachine.

La rotation de la roue est ensuite stoppée ou ralentie, les aubes 2 étant maintenues et stabilisées par les cales 11 dans leur position de fonctionnement. Les entretoises sont alors retirées sans risque de déplacement des aubes 2.

L'équilibrage de la roue à aubes 2 peut ensuite être effectué à vitesse réduite, de façon précise, puisque les déplacements circonférentiels ou encore les basculements des aubes 2 sont empêchés par les cales 11.

A titre d'exemple, pour une aube 2 de 17 grammes, la vitesse de changement de position de la cale 5 peut être choisie à environ 2500 tours par minute ou encore à environ 3500 tours par minute, la force résiduelle s'appliquant sur le pied d'aube 4 en deuxième position stable étant de 0,5 N. La masselotte 8 peut avoir une masse de l'ordre de 0,15 g si la vitesse de rotation correspondant au changement de position est 2500 tours par minute, la masse étant de l'ordre de 0,075 g si cette vitesse de rotation est de 3500 tours par minute.

En variante, les pieds d'aubes 4 peuvent être logés dans des rainures sensiblement axiales, comme décrit au document FR 2 881 174. Dans ce cas, les cales 11 ne comportent pas nécessairement de languette 10. Le principe de fonctionnement de l'invention reste toutefois semblable à celui décrit ci-dessus.

## Revendications

1. Roue à aubes (2) de turbomachine, comprenant un disque (1) dont la périphérie externe est formée avec au moins une rainure (3) de montage des pieds (4) des aubes (2), une cale (11) étant montée entre chaque pied d'aube (4) et le fond de la rainure (3), la cale (11) étant du type bistable en position et comprenant une lame ressort déformable (5) pouvant occuper une première position stable de montage ou de démontage dans laquelle elle n'exerce pas d'effort sur le pied d'aube (4) et une seconde position stable dans laquelle elle exerce un effort radial sur le pied d'aube (4) pour immobiliser l'aube (2) et la stabiliser dans une position finale, **caractérisée en ce que** la forme et la masse de la lame ressort (5) sont déterminées de façon à ce que le passage de la première position stable à la seconde position stable s'effectue par centrifugation.

2. Roue selon la revendication 1, **caractérisée en ce que** la lame ressort (5) est en appui à ses extrémités (6) sur le fond de la rainure (3) et comprend une zone centrale (7) déformable bistable en position.

3. Roue selon la revendication 2, **caractérisée en ce que** les extrémités (6) de la lame ressort (5) comportent des rebords incurvés et repliés en direction de la zone centrale (7).

4. Roue selon la revendication 2 ou 3, **caractérisée en ce que** la zone centrale (7) de la lame ressort (5) comporte une masselotte (8).

5. Roue selon l'une des revendications 1 à 4, **caractérisée en ce que** le disque (1) comporte une rainure ou une gorge circonférentielle (3) dans laquelle sont engagés les pieds d'aubes (4) et les cales (11).

6. Roue selon la revendication 5, **caractérisée en ce qu'**au moins une extrémité circonférentielle des cales (11) comporte au moins une languette (10), destinée à venir en appui contre le pied d'aube (4) correspondant.

7. Procédé de montage et d'équilibrage d'une roue selon l'une des revendications 1 à 6, **caractérisé en ce qu'**il comporte les étapes consistant à :
- monter les aubes (2) et les cales (11) en position de montage dans la ou les rainures (3) du disque (1),
- faire tourner la roue à une vitesse suffisante pour déplacer les aubes (2) par centrifugation dans une position de fonctionnement normal, et pour provoquer le passage de chaque cale (11) dans sa seconde position stable de manière à stabiliser les aubes (2) dans leur position de fonctionnement,
- réaliser l'équilibrage de la roue pour annuler le balourd.

8. Procédé selon la revendication 7, **caractérisé en ce que** le passage des cales (11) dans leur seconde position stable est obtenu par rotation à une vitesse supérieure à 2000 tours par minute, par exemple lors d'une opération de rectification des extrémités des aubes (2).

9. Procédé selon la revendication 7 ou 8, **caractérisé en ce que** des entretoises sont montées circonférentiellement entre au moins certaines des aubes (2) avant maintien des aubes (2) par les cales (11), les entretoises étant retirées après maintien des aubes (2) par les cales (11).

## Patentansprüche

1. Flügelrad (2) einer Turbomaschine, umfassend eine Scheibe (1), deren externe Peripherie mit wenigstens einer Rille (3) zur Montage der Füße (4) der Flügel (2) geformt ist, wobei ein Keil (11) zwischen jedem Flügelfuß (4) und dem Boden der Rille (3) montiert ist, wobei der Keil (11) von dem in der Position bistabilen Typ ist und eine verformbare Blattfeder (5) umfasst, die eine erste stabile Montage- oder Demontageposition einnehmen kann, in der sie keine Kraft auf den Flügelfuß (4) ausübt, und eine zweite stabile Position, in der sie eine radiale Kraft auf den Flügelfuß (4) ausübt, um den Flügel (2) festzustellen und ihn in einer endgültigen Position zu stabilisieren, **dadurch gekennzeichnet, dass** die Form und die Masse der Blattfeder (5) derart bestimmt sind, dass der Übergang von der ersten stabilen Position in die zweite stabile Position per Zentrifugieren erfolgt.

2. Rad gemäß Anspruch 1, **dadurch gekennzeichnet, dass** die Blattfeder (5) an ihren Enden (6) auf dem Boden der Rille (3) zum Aufstützen kommt und einen in der Position bistabilen verformbaren zentralen Bereich (7) aufweist.

3. Rad gemäß Anspruch 2, **dadurch gekennzeichnet, dass** die Enden (6) der Blattfeder (5) nach innen gebogene und in Richtung des zentralen Bereichs (7) umgebogene Ränder umfassen.

4. Rad gemäß Anspruch 2 oder 3, **dadurch gekennzeichnet, dass** der zentrale Bereich (7) der Blattfeder (5) ein Fliehgewicht (8) umfasst.

5. Rad gemäß Anspruch 1 bis 4, **dadurch gekennzeichnet, dass** die Scheibe (1) eine Rille oder eine umlaufende Auskehlung (3) hat, in der die Flügelfüße (4) und die Keile (11) eingegriffen sind.

6. Rad gemäß Anspruch 5, **dadurch gekennzeichnet, dass** wenigstens ein umlaufendes Ende der Keile (11) wenigstens eine Zunge (10) umfasst, die dazu bestimmt ist, gegen den entsprechenden Flügelfuß (4) zum Aufstützen zu kommen.

7. Montage- und Auswuchtungsverfahren eines Rades gemäß Anspruch 1 bis 6, **dadurch gekennzeichnet, dass** es die Stufen umfasst, bestehend aus:
- Montieren der Flügel (2) und der Keile (11) in der Montageposition in der oder den Rille (n) (3) der Scheibe (1),
- Zum-Drehen-Bringen des Rades bei einer ausreichenden Geschwindigkeit, um die Flügel (2) per Zentrifugieren in einer normalen Betriebsposition zu verschieben und um den Übergang jedes Keils (11) in seine zweite stabile Position derart hervorrufen zu können, dass die Flügel (2) in ihrer Betriebsposition stabilisiert sind,
- Realisierung der Auswuchtung des Rades, um die Unwucht zu annullieren.

8. Verfahren gemäß Anspruch 7, **dadurch gekennzeichnet, dass** der Übergang der Keile (11) in ihre zweite stabile Position per Rotation bei einer höheren Geschwindigkeit von 2.000 Umdrehungen pro Minute erhalten wird, z. B. bei einer Korrekturoperation der Enden der Flügel (2).

9. Verfahren gemäß Anspruch 7 oder 8, **dadurch gekennzeichnet, dass** umlaufend zwischen wenigstens einigen Flügeln (2) vor dem Festhalten der Flügel (2) durch die Keile (11) Zwischenstege montiert sind, wobei die Zwischenstege nach dem Festhalten der Flügel (2) durch die Keile (11) entfernt werden.

## Claims

1. A turbine engine rotor wheel (2) comprising a disk (1) having at least one slot (3) formed in its outer periphery for mounting the roots (4) of blades (2), a presser (5) being mounted between each blade root (4) and the bottom of the slot (3), the presser (5) being of the type that is bistable in position and comprising a deformable spring blade, being capable of occupying a first stable position for assembly and disassembly in which it does not exert a force on the blade root (4), and a second stable position in which it exerts a radial force on the blade root (4) in order to hold the blade (2) stationary and in order to stabilize it in a final position, the wheel being **characterized in that** the shape and the weight of the presser (5) are determined so that the passage from the first stable position to the second stable position is performed by centrifuging.

2. A wheel according to claim 1, **characterized in that** the spring blade (5) bears at its ends (6) against the bottom of the slot (3) and includes a deformable central zone (7) that is bistable in position.

3. A wheel according to claim 2 or 3, **characterized in that** the ends (6) of the spring blade (5) have curved rims that are folded towards the central zone (7).

4. A wheel according to claim 2 or 3, **characterized in that** the central zone (7) of the spring blade (5) includes a flyweight (8).

5. A wheel according to any one of claims 1 to 4, **characterized in that** the disk (1) includes a circumferential slot (3) in which the blade roots (4) and the pressers (5) are engaged.

6. A wheel according to claim 5, **characterized in that** at least one circumferential end of each presser (5) includes at least one tongue (10) for bearing against the corresponding blade root (4).

7. A method of assembling and balancing a wheel according to any one of claims 1 to 6, the method being **characterized in that** it comprises the steps consisting in:
· mouting the blades (2) and the pressers (5) in a mounting position in the slot(s) (3) of the disk (1);
· causing the wheel to rotate at a speed that is fast enough to move the blades (2) by centrifuging into a normal operating position and to cause each presser (5) to pass into its second stable position so as to stabilize the blades (2) in their operating position; and
· balancing the wheel in order to eliminate any unbalance.

8. A method according to claim 7, **characterized in that** the pressers (5) are caused to pass into their second stable position by rotating at a speed faster than 2000 rpm, e.g. during an operation of positioning the ends of the blades (2).

9. A method according to claim 7 or 8, **characterized in that** spacers are mounted circumferentially between at least some of the blades (2) prior to the blades (2) being held by the pressers (5), the spacers being removed after the blades (2) are held by the spacers (5).
